(19) Europäisches Patentamt
European Patent Office
Office européen des brevets

(11) **EP 1 475 777 B1**

(12) **EUROPEAN PATENT SPECIFICATION**

(45) Date of publication and mention of the grant of the patent:
**17.02.2010  Bulletin 2010/07**

(51) Int Cl.:
***G10L 15/06*** (2006.01)

(21) Application number: **04252465.2**

(22) Date of filing: **28.04.2004**

(54) **KEYWORD RECOGNITION APPARATUS AND METHOD, PROGRAM FOR KEYWORD RECOGNITION, INCLUDING KEYWORD AND NON-KEYWORD MODEL ADAPTATION**

VERFAHREN UND VORRICHTUNG ZUR SCHLÜSSELWORTERKENNUNG, PROGRAMM ZUR SCHLÜSSELWORTERKENNUNG, MIT ADAPTION VON SCHLÜSSELWORT- UND NICHTSCHLÜSSELWORTMODELLEN.

METHODE ET DISPOSITIF DE RECONNAISSANCE DE MOTS-CLE, PROGRAMME POUR LA RECONNAISSANCE DE MOTS-CLE, AVEC ADAPTATION DE MODELES DE MOTS-CLE ET DE NON-MOTS-CLE.

(84) Designated Contracting States:
**DE FR GB**

(30) Priority: **28.04.2003  JP 2003123178**

(43) Date of publication of application:
**10.11.2004  Bulletin 2004/46**

(73) Proprietor: **Pioneer Corporation**
**Meguro-ku,**
**Tokyo (JP)**

(72) Inventors:
• **Kobayashi, Hajime**
**c/o Pioneer Corporation**
**Tsurugashima-shi,**
**Saitama-ken (JP)**
• **Toyama, Soichi**
**c/o Pioneer Corporation**
**Tsurugashima-shi,**
**Saitama-ken (JP)**
• **Kawazoe, Yoshihiro**
**c/o Pioneer Corporation**
**Tsurugashima-shi,**
**Saitama-ken (JP)**
• **Hanai, Kengo**
**c/o Pioneer Corporation**
**Yamada,**
**Kawagoe-shi,**
**Saitama-ken (JP)**

(74) Representative: **Haley, Stephen**
**Gill Jennings & Every LLP**
**Broadgate House**
**7 Eldon Street**
**London EC2M 7LH (GB)**

(56) References cited:
**EP-A- 1 215 654     US-A- 5 842 165**

• **HOFSTETTER E M ET AL: "Techniques for task independent word spotting in continuous speech messages" DIGITAL SIGNAL PROCESSING 2, ESTIMATION, VLSI. SAN FRANCISCO, MAR. 23, vol. VOL. 5 CONF. 17, 23 March 1992 (1992-03-23), pages 101-104, XP010058850 ISBN: 0-7803-0532-9**
• **NITTA T ET AL: "Word-spotting based on inter-word and intra-word diphone models" SPOKEN LANGUAGE, 1996. ICSLP 96. PROCEEDINGS., FOURTH INTERNATIONAL CONFERENCE ON PHILADELPHIA, PA, USA 3-6 OCT. 1996, NEW YORK, NY, USA,IEEE, US, 3 October 1996 (1996-10-03), pages 1093-1096, XP010237813 ISBN: 0-7803-3555-4**

EP 1 475 777 B1

• GORONZY S ET AL: "A MAP-LIKE WEIGHTING SCHEME FOR MLLR SPEAKER ADAPTATION" 6TH EUROPEAN CONFERENCE ON SPEECH COMMUNICATION AND TECHNOLOGY. EUROSPEECH '99. BUDAPEST, HUNGARY, SEPT. 5 - 9, 1999, EUROPEAN CONFERENCE ON SPEECH COMMUNICATION AND TECHNOLOGY. (EUROSPEECH), BONN : ESCA, DE, vol. VOL. 1 OF 6, 5 September 1999 (1999-09-05), pages 5-8, XP001076051

## EP 1 475 777 B1

**Description**

The present invention relates generally to the field of a voice recognition apparatus, a voice recognition method and a program for voice recognition, and more particularly to the field of the voice recognition apparatus and method for recognizing a keyword, which is a word to be recognized, of spoken words included in voice of speech, in distinction from non-keywords included in the spoken words excluding the keyword, as well as the program for voice recognition for making such a recognition, and an information recording medium on which such a program has been recorded.

There have been developed voice recognition apparatus for recognizing voice of a speech of a person. Such an apparatus is configured to recognize, in case where a person produces sounds of a predetermined word, the sounds of this word from voice information, which is obtained by converting the sounds into electric signals through a microphone.

Application of such a voice recognition processing to a navigation system in which the voice recognition apparatus is utilized, or various kinds of systems such as personal computers in which such a voice recognition apparatus is utilized, makes it possible to input various kinds of information into such a system, without using any manual operation such as a keyboard operation or a switch selection operation.

It is therefore possible for a person, who is driving a car on which the navigation apparatus is mounted, to input predetermined information into the navigation apparatus without conducting any manual operation, even when both hands of the person are used to drive the car.

Typical voice recognition methods, which are applicable to such a voice recognition apparatus, include a method for recognizing a voice (hereinafter referred to as the "voice recognition) utilizing a probability model, which is called "HMM (Hidden Markov Model)".

In the above-mentioned voice recognition, a pattern of voice of speech having an amount of features is matched with one of patterns of voice having an amount of features, which are indicative of candidate keywords, which have previously been prepared (hereinafter referred to as the "keywords"), to make a voice recognition.

More specifically, the voice recognition is configured so that voice of speech (i.e. , voice information) , which has been inputted at the predetermined interval is analyzed to extract an amount of features and there is calculated the similarity according to the HMM, of the keyword corresponding to the amount of features of the voice information, which keyword has been stored in a database, and then summation of the similarity for the whole voice of speech is obtained, and the keyword having the highest summed similarity is determined as the recognition result. The voice recognition of the predetermined word can be provided utilizing the voice of speech, i.e., the voice information.

The HMM is a statistical signal source model as expressed in the form of collection of transitional states, and is also amodel , which is indicative of an amount of features of voice to be recognized, such as a keyword. The HMM is generated based on a plurality of voice data, which has previously been collected.

In such voice recognition, it is important how to extract a keyword portion, which serves as the keyword included in the voice of speech.

In general, the voice of speech includes, in addition to the above-mentioned keyword, previously known non-keywords (e. g. , the first part of speech of "eh, ..." in Japanese language, which is an interjection meaning "Well, .. " or "er, ..." ), which are determined to be unnecessary, when making recognition of the keyword. The last part of speech of "... desu" in Japanese language, which means "is", may be determined to be unnecessary, when making recognition of the keyword. Accordingly, the voice of speech is composed in principle of the first part non-keyword, the last part non-keyword and the keyword placed between these non-keywords. In view of these tendencies, there has often been utilized a technique called the "word-spotting" in which only the keyword(s) for a word to be recognized is extracted to make recognition of the word.

In the word-spotting voice recognition, there are prepared the HMM indicative of the keyword model (hereinafter referred to as the "keyword model") for voice of speech to be recognized, and in addition, the other HMM indicative of the non-keyword model (i.e., the garbage model (hereinafter referred to as the "non-keyword model") for the above-mentioned voice of speech. The keyword model having the highest similarity in amount of features, the non-keyword model having the highest similarity in amount of features, or combination thereof is determined to make the voice recognition.

As one of measures to improve an accurate recognition rate in the voice recognition, there exists the processing in which, in case where a speaker who produces the voice to be recognized is previously identified, the above-mentioned HMM is updated based on the accurate recognition results of the voice, which has previously been generated by the identified speaker, and the specialized HMM for the identified speaker is formed, thus enhancing the recognition rate for the identified speaker. This processing is hereinafter referred to as the "speaker adaptation processing".

Alternatively, there also exists the processing in which the speaker adaptation processing and the above-described word-spotting voice recognition are combined with each other so that the keyword model and the non-keyword model are updated independently to form specialized models thereof for the identified speaker, thus further enhancing the recognition rate for the identified speaker.

In the combination of the conventional speaker adaptation processing with the conventional word-spotting

**EP 1 475 777 B1**

voice recognition, both of the keyword model and the non-keyword model are subjected to the updating processing, utilizing the same speaker adaptation processing, irrespective of difference between these models.

However, in the combination of the conventional speaker adaptation processing with the conventional word-spotting voice recognition, it is ideal to carry out the matching processing of the keyword model so that the keyword is matched only with certain sub-words (i.e., phonemes or syllables into which the word can be divided) to be matched, and it is required to carry out the matching processing of the non-keyword model so as to provide a moderate matching over the whole sounds of voice, in order to enhance finally the recognition rate.

More specifically, it is ideal to make the likelihood of the keyword model higher than the likelihood of the non-keyword model, for utterance of sub-words that are subjected to the matching for the keyword model, on the one hand, and make the likelihood of the non-keyword model higher than the likelihood of the keyword model, for utterance of the sub-words that are not subjected to the matching for the keyword model, on the other hand. When the likelihood between the above-mentioned utterance and the keyword model (hereinafter referred to as the "keyword likelihood") is larger than the likelihood between the above-mentioned utterance and the non-keyword model (hereinafter referred to as the "non-keyword likelihood"), the recognition rate for the keyword is improved, and the larger difference between them, the more remarkable improvement can be obtained. On the contrary, when the difference between them is small, or the non-keyword likelihood is larger than the keyword likelihood, the recognition rate for the keyword is deteriorated.

In the above-described speaker adaptation processing, the keyword model and the non-keyword model are updated through the subsequent speaker adaptation processing so that the lower the keyword likelihood or non-keyword likelihood, the more improvement in likelihood is obtained, in principle.

Accordingly, in the usual utterance case where the correct-non-keyword likelihood indicative of the correct recognition result for the non-keyword is smaller than the correct-keyword likelihood indicative of the correct recognition result for the keyword, application of the same speaker adaptation processing to each of the keyword model and the non-keyword model causes the difference between the correct-non-keyword likelihood and the correct-keyword likelihood to become easily smaller. As a result, the speaker adaptation processing is excessively adapted to the non-keyword model, thus causing problems.

These problems disable the performance of the speaker adaptation processing in the word-spotting voice recognition from being improved.

Hofstetter E M et al: "Techniques for task independent word spotting in continuous speech messages" Digital Signal Processing 2, Estimation, VLSI. San Francisco, Mar. 23 1992, Vol. 5, Conf. 17 ISBN: 0-7803-0532-9 and EP1215654 discuss further methods for recognizing speech, with speaker adaptation techniques.

An object of the present invention, which was made in view of the above-described problems, is therefore to provide voice recognition method and apparatus, which permit to prevent the non-keyword model from being excessively adapted to the voice information corresponding to the inputted voice, to improve the recognition rate for the keyword, as well as to provide a program for voice recognition for making such a recognition, and an information recording medium on which such a program has been recorded.

According to the present invention there is provided a voice recognition apparatus for recognizing a keyword to be recognized, from spoken words included in voice of speech, based on voice information corresponding to said voice, characterized by comprising:

a keyword model storing device for previously storing, for each keyword, a plurality of words to be potentially spoken as the keyword, in a form of keyword models;
a non-keyword model storing device for previously storing a plurality of words to be potentially spoken as a non-keyword, which is included in said spoken words excluding said keyword, in a form of non-keyword models;
a model updating device for individually updating said keyword models and said non-keyword models, based on a previously recognized word, which has already been recognized as the keyword given by a speaker; and
a recognition device for matching the updated keyword models and the updated non-keyword models with said voice information to recognize said keyword,

wherein, when updating the non-keyword model, the updating device uses a variation vector which is smaller than a variation vector correponding to the case where the same updating processing as that of the keyword model is applied to the updating of the non-keyword model.

According to the present invention there is also provided a voice recognition method carried out in a voice recognition system comprising a keyword model storing device for previously storing, for each keyword to be recognized, of spoken words included in voice of speech, a plurality of words to be potentially spoken as the keyword, in a form of keyword models, and a non-keyword model storing device for previously storing a plurality of words to be potentially spoken as a non-keyword, which is included in said spoken words excluding said keyword, in a form of non-keyword models, to recognize said keyword based on voice information corresponding to said voice, said method characterized by comprising:

4

a model updating step for individually updating said keyword models and said non-keyword models, based on a previously recognized word, which has already been recognized as the keyword given by a speaker; and

a recognition step for matching the updated keyword models and the updated non-keyword models with said voice information to recognize said keyword,

wherein, when updating the non-keyword model, the updating device uses a variation vector which is smaller than corresponding to the case where the same updating processing as that of the keyword model is applied to the updating of the non-keyword model.

According to the present invention there is also provided a program for voice recognition, which is to be executed by a computer included in a voice recognition system comprising a keyword model storing device for previously storing, for each keyword to be recognized from spoken words included in voice of speech, a plurality of words to be potentially spoken as the keyword in a form of keyword models, and a non-keyword model storing device for previously storing a plurality of words to be potentially spoken as a non-keyword, which is included in said spoken words excluding said keyword, in a form of non-keyword models, to recognize said keyword based on voice information corresponding to said voice, to cause the computer to function as:

a model updating device for individually updating said keyword models and said non-keyword models, based on a previously recognized word, which has already been recognized as the keyword given by a speaker; and

a recognition device for matching the updated keyword models and the updated non-keyword models with said voice information to recognize said keyword,

wherein said computer is caused to function as said model updating device that updates the non-keyword models using a variation vector which is smaller than corresponding to the case where the same updating processing as that of the keyword model is applied to the updating of the non-keyword model.

According to the present invention there is also provided an information recording medium on which the above-described program for voice recognition is recorded so as to be readable by said computer.

In the drawings:

FIG. 1 is a schematic diagram illustrating a principle of the present invention;

FIG. 2 is a block diagram illustrating a schematic configuration of a navigation processing according to an embodiment of the present invention;

FIG. 3 is a block diagram illustrating a detailed configuration of a voice recognition unit according to the embodiment of the present invention;

FIG. 4 is a block diagram illustrating a detailed configuration of a speaker adaptation processing unit according to the embodiment of the present invention;

FIG. 5 is a block diagram illustrating a detailed configuration of a non-keyword model adaptation processing unit according to the embodiment of the present invention;

FIG. 6 is a flowchart illustrating a voice recognition processing according to the embodiment of the present invention;

FIG. 7 a block diagram illustrating a detailed configuration of the modified voice recognition unit according to the embodiment of the present invention; and

FIG. 8 is a graph illustrating experimental examples according to the present invention.

Now, preferred embodiments of the present invention will be described in detail below with reference to the accompanying drawings. In the embodiment described below, the present invention is applied to a voice recognition device included in a navigation apparatus to be mounted on a car.

[I] Principle of the Present Invention

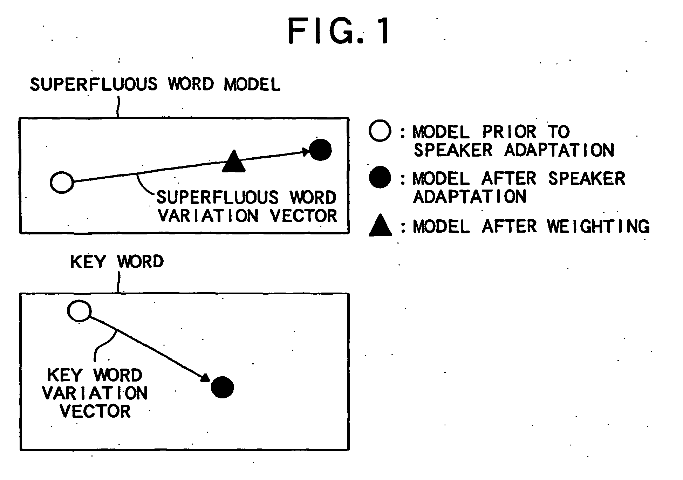

Prior to description of the concrete embodiment of the present invention, the principle of the present invention will be first described with reference to FIG. 1. FIG. 1, which is a schematic diagram illustrating the first principle of the present invention, shows variation from the keyword model and the non-keyword model, which have not as yet been subjected to the speaker adaptation processing according to the present invention, to those, which have been subjected thereto.

In the present invention, first, the novel updating processing is applied to the non-keyword model, so as to avoid the problem that the above-mentioned non-keyword model is excessively adapted to the voice information corresponding to the input voice.

More specifically, when the same speaker adaptation processing is applied to the keywordmodel and the non-keyword model, which have not as yet been subjected to the updating processing in the speaker adaptation processing (such models are shown by the symbol of "O" in FIG. 1), each of the keyword model and the non-keyword model are updated from the model indicated by the symbol "○" to the model indicated by symbol "●" - However, according to the first principle of the present invention, only for the non-keyword model, a dividing point (as shown by the symbol "▲" in FIG. 1) , which divides internally a non-keyword variation vector indicative of variation from the non-keyword model "○", which has not as yet been subj ected to the speaker adaptation processing, to the non-keyword model "●", which has already been subj ected to the speaker adaptation processing, (such a non-keyword variation vector corresponds to transformation matrix to update the non-keyword model), at a predetermined ratio, is utilized as the updated non-keyword model. The non-keyword model is updated with the non-keyword variation vector, which is smaller than the other non-keyword variation vector that is obtained when the same speaker adaptation processing as the keyword model is applied to the non-keyword model.

The "keyword variation vector" as shown in FIG. 1 also corresponds to transformation matrix to update the keyword model.

According to the above-mentioned first principle of the present invention, the likelihood of the non-keyword model corresponding to the voice information becomes smaller than the likelihood of the keyword model corresponding to the above-mentioned voice information, thus preventing the speaker adaptation processing from being excessively adapted to the non-keyword model.

In the second principle of the present invention, an executionmode of apenaltyprocessingto reduce the likelihood of the non-keyword model corresponding to the voice information is changed in accordance with an execution status of the speaker adaptation processing applied to the non-keyword model, and namely, whether or not the speaker adaptation processing is to be executed, or the number of execution of the speaker adaptation processing. More specifically, the execution mode of the penalty processing is changed so that the likelihood of the non-keyword model becomes lower than the likelihood of the keyword model corresponding to the voice information, in accordance with the execution status of the speaker adaptation processing.

According to the above-mentioned second principle of the present invention, the likelihood of the non-keywordmodel corresponding to the voice information also becomes smaller than the likelihood of the keyword model corresponding to the above-mentioned voice information, thus preventing the speaker adaptation processing from being excessively adapted to the non-keyword model.

[II] Embodiment of the Present Invention

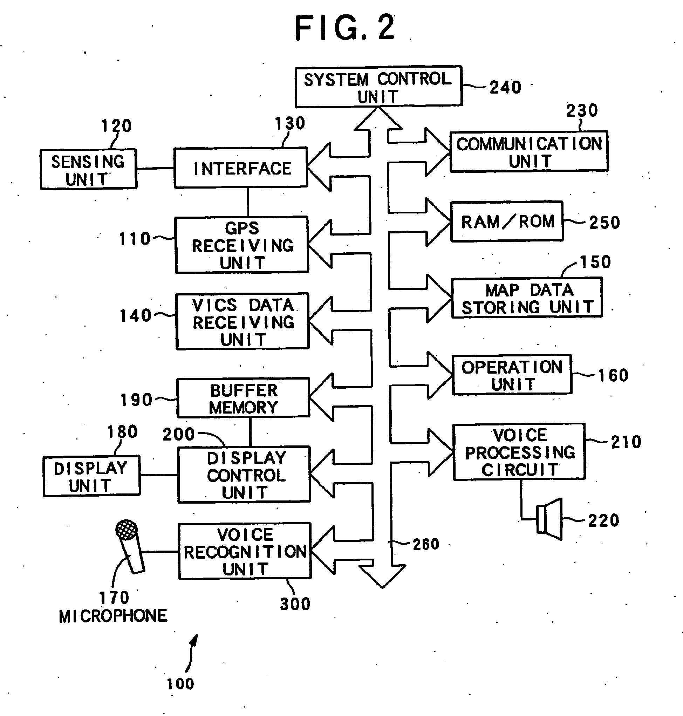

Description will be given below of the embodiment of the present invention based on the above-described principles, with reference to FIGS. 2 to 6.

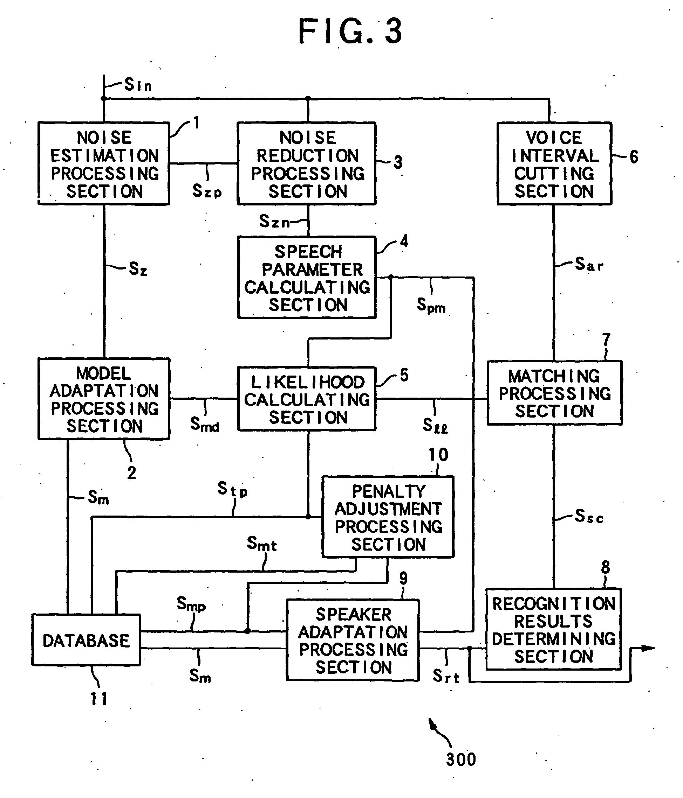

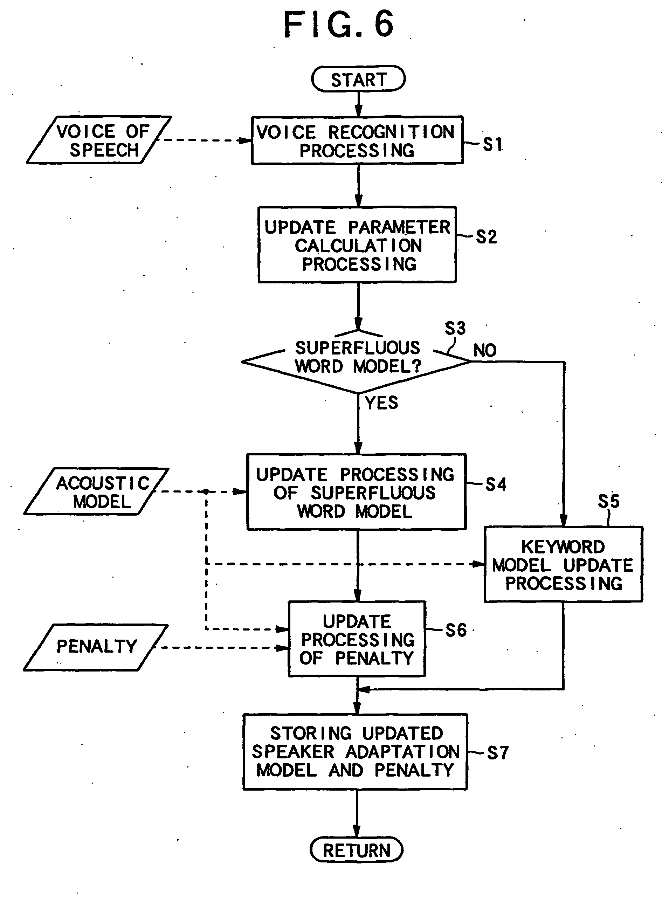

FIG. 2 is a block diagram illustrating the schematic configuration of the navigation apparatus according to the embodiment of the present invention, FIGS. 3 to 5 are block diagrams illustrating the detailed configuration of the components of the navigation apparatus and FIG. 6 is a flowchart illustrating the speaker adaptation processing according to the present invention.

First, the schematic configuration of the navigation apparatus according to the present invention and operation thereof will be described with reference to FIG. 2.

As shown in FIG. 2, the navigation apparatus 100 according to the present invention includes a GPS (Global Positioning System) receiving unit 110, a sensing unit 120, an interface 130, a VICS (Vehicle Information and Communication System) data receiving unit 140, a map data storing unit 150, an operation unit 160, a microphone 170, a voice recognition unit 300, a display unit 180, a display control unit 200, a voice processing circuit 210, a loudspeaker 220, a communication unit 230, a system control unit 240 and ROM (Read Only Memory)/RAM (Random Access Memory) 250. The GPS receiving unit 110 is connected with a not shown antenna to receive the GPS data. The sensing unit 120 detects driving data such as driving velocity of a car. The interface 130 calculates the position of the car of a driver based on the GPS data and the driving data. The VICS data receiving unit 140 receives the VICS data. The map data storing unit 150 includes the map data previously stored therein. The operation unit 160 is used to enable a user, i.e., the driver to make setting and input a command to the system. The microphone 170 collects voice of the user. The voice recognition unit 300 recognizes the vocal command from the voice collected by the microphone 170. The display unit 180 displays the map data and the position of the car. The display control unit 200 controls the display unit 180 through a buffer memory 190. The voice processing circuit 210 generates voice such as voice for root guidance. The loudspeaker 220 converts energy of the electric signal outputted from the voice processing circuit 210 into energy of acoustic signal to generate sounds. The communication unit 230 makes communication with a public telephone network or an Internet connection through an antenna. The system control unit 240 executes the navigation processing such as a route search and controls the whole system. The system control unit 240 is connected to the other components mentioned above through a bus 260.

According to the above-described configuration, the GPS receiving unit 110 receives navigation radio waves from a plurality of artificial satellites under the GPS through the antenna, calculates, based on the thus received waves, pseudo-coordinate values for the current position of a movable body, i.e., the car, and outputs these values to the interface 130 in the form of the GPS data.

The sensing unit 120 detects the driving data such as the driving velocity, angular velocity and azimuth of the car and outputs the driving data thus detected to the interface 130.

More specifically, the sensing unit 120 first detects the driving velocity of the car, converts the driving velocity as detected into the velocity data in the form of pulse or voltage, and outputs them to the interface 130.

Then, the sensing unit 120 compares gravitational acceleration with acceleration caused by movement of the car to detect the moving state of the car in the vertical direction, converts acceleration data indicative of the thus detected moving state into pulse or voltage, and outputs them to the interface 130.

Further, the sensing unit 120 is provided with a so-called gyro-sensor so as to detect the azimuth of the car, i.e., the traveling direction of the driving car, convert the detected azimuth into azimuth data in the form of pulse or voltage, and output them to the interface 130.

The interface 130 conducts an interface processing between the system control unit 240 and the combination of the sensing unit 120 and the GPS receiving section 110, calculates the position of the car of the driver based on the GPS data as inputted and the driving data, and outputs the position of the car in the form of the own car positional data to the system control unit 240.

The own car positional data are matched with the map data in the system control unit 240 so as to be utilized in a so-called map matching processing.

Then, the VICS data receiving unit 140 receives radio waves such as waves of FM multiplex broadcasting to obtain the VICS data and outputs the thus obtained VICS data to the system control unit 240. In this case, the "VICS" means a road traffic information communication system and the "VICS data" means road traffic information such as traffic jam, an accident and road traffic regulation.

In addition, the map data storing unit 150 includes for example a hard disc so as to read the map data such as road maps, which have previously recorded, and the other necessary information for guidance of driving (hereinafter referred to as the "map data, etc.") from the hard disc and outputs the map data, etc. as read out to the system control unit 240.

The map data, etc. have information stored therein of the map data including road shape data required for the navigation operation, on the one hand, and various kinds of associated data including names of destinations such as parks and stores and their positional data so that the associated data correspond to the road shape data. The whole map is divided into a plurality of blocks in the form of mesh so that the map data corresponding to the respective blocks are managed as block-map data.

The operation unit 160 includes a remote control device provided with many kinds of confirmation buttons, selection buttons and many keys such as numeric keys. Such an operation unit 160 is especially used to input a command such as a starting command for the voice recognition processing of the user (i.e., the driver).

The voice recognition unit 300 to which voice of speech inputted through the microphone 170 by the user is to be inputted, analyzes the voice of speech as inputted in the form of the operation command for the navigation apparatus 100, and outputs the results of analysis to the system control unit 240.

Description will be given later in detail of the configuration of the voice recognition unit 300 according to the embodiment of the present invention and its operation.

The display unit 180, which is composed for example of a CRT (Cathode Ray Tube) or liquid crystal elements, displays not only the above-described map data, etc. , in various modes, but also situational information such as the position of the car, which is required for the route guidance, so as to be superimposed on the map data, etc., under the control of the display control unit 200. The display unit 180 also displays contents information other than the map data, etc. More specifically, the display unit 180 displays, through display control, the contents information based on the instructions from the system control unit 240.

The display control unit 200 to which the map data, etc., as inputted through the system control unit 240 are to be inputted, generates display data, which are to be displayed on the display unit 180 on the basis of the instructions from the system control unit 240, temporarily stores the display data in the buffer memory 190, and reads the display data from the buffer memory 190 at a predetermined timing, and outputs them to the display unit 180.

The voice processing circuit 210 generates voice signals based on the instructions from the system control unit 240 and outputs the voice signals thus generated in the form of sound from the loudspeaker 220. More specifically, the voice processing circuit 210 outputs (i) information for the route guidance including the direction at the next intersection to which the car should drive, a traffic jam information and a closed information to traffic, which are to be given directly to the driver during the driving guidance and (ii) the voice recognition results given by the voice recognition unit 300 to the loudspeaker 220 in the form of voice signals.

The system control unit 240, which includes various kinds of input and output ports such as a GPS receiving port, a key-input port, and a display control port, control the entire functions of the navigation processing.

The system control unit 240 also controls the whole operation of the navigation apparatus 100 so as to read a control program stored in the ROM/RAM 250 to execute the respective processing, on the one hand, and stores temporarily the data, which are now being processed, in the ROM/RAM 250, to make a control for the road guidance, on the other hand. More specifically, the system control unit 240 controls, when carrying out the navigation processing, the voice recognition unit 300, and especially, the speaker adaptation processing section described later to cause it to analyze voice of speech inputted by the user through the microphone 170 and recognize this voice of speech. A command for the navigation processing is obtained from the recognized voice of speech so as to control the relevant sections.

Now, the detailed configuration of the voice recognition section 300 according to the present invention will be described with reference to FIG. 3.

As shown in FIG. 3, the voice recognition section 300 according to the embodiment of the present invention, includes a noise estimation processing section 1, a model adaptation processing section 2, a noise reduction processing section 3, a speech parameter calculating section 4, a likelihood calculating section 5 serving as the likelihood calculating device, a voice interval cutting section 6, a matching processing section 7, a recognition result determining section 8 serving as the recognition device, a speaker adaptation processing section 9 serving as the model updating device, a penalty adjustment processing section 10 serving as the correction value updating device, and a database 11 serving as the keywordmodel storing device and the non-keyword model storing device.

Now, operation will be described below.

First, voice of speech is converted into electric signals through the microphone 170. When such electric signals are inputted as a voice information "Sin" to the voice recognition unit 300, the voice information "Sin" is outputted to each of the noise estimation processing section 1, the noise reduction processing section 3 and the voice interval cutting section 6.

The noise estimation processing section 1 calculates, from a part of the voice information "Sin", which corresponds to a section between an utterance start point to a point after lapse of a few hundred milliseconds, a so-called "noise model" "Sz" (i:e., one of adaptation parameters for voice recognition) for the model adaptation processing, and noise parameters "Szp" for the noise reduction processing in the noise reduction processing section 3, and outputs the noise model "Sz" and the noise parameters "Szp" to the model adaptation processing section 2 and the noise reduction processing section 3, respectively.

Then, the model adaptation processing section 2 reads an acoustic model "Sm" for an unspecified speaker (i.e. , the HMM for an unspecified speaker) , which has previously been stored in the database 11 described later, conducts a so-called "model adaptation" with the use of the acoustic model "Sm" and the above-mentioned noise model "Sz" , and then, an acoustic model after the model adaptation "Smd" to the likelihood calculating section 5. The above-mentioned model adaptation may not be carried out, and the acoustic model "Sm" may be outputted directly to the likelihood calculating section 5.

The noise reduction processing section 3 to which the above-mentioned noise parameters "Szp" have been inputted, applies the noise reduction processing to the whole of the above-mentioned voice information "Sin" including the voice of speech to generate a noise reduction voice information "Szn" , and outputs such a generated information to the speech parameter calculating section 4. A so-called "spectrum subtraction processing" may be given as a typical example of the above-mentioned noise reduction processing.

The speech parameter calculating section 4 converts the above-mentioned noise reduction voice information "Szn" into a feature parameter "Spm" corresponding to the noise reduction voice information "Szn", and outputs the feature parameter "Spm" to each of the likelihood calculating section 5 and the speaker adaptation processing section 9. A so-called "LPC (Liner Predictive Coding) cepstrum" may be given ad a typical example of the above-mentioned feature parameter.

The likelihood calculating section 5 calculates, for each acoustic model "Smd", the likelihood of the acoustic model "Smd" and the likelihood of the feature parameter "Spm" to generate a likelihood information "S11" indicative of such a likelihood, and outputs the thus generated likelihood information "S11" to the matching processing section 7. The processing of the likelihood calculating section 5 will be described later.

The voice interval cutting section 6 conducts an interval estimation for a voice section, which has previously been set on the basis of the voice information "Sin", to generate estimation results, i.e., a cutting voice information "Sar", and outputs the thus generated cutting voice information "Sar" to the matching processing section 7.

The matching processing section 7 conducts the matching processing within the range of the voice section in the above-mentioned cutting voice information "Sar", with the use of the likelihood based on the above-mentioned likelihood information "S11", calculates score indicative of similarities in all of the keywords to be recognized, and outputs the thus calculated score for each of the keywords to the recognition result determining section 8 in the form of score information "Ssc".

The recognition result determining section 8 outputs the keyword corresponding to the score information "Ssc", which has the maximum value in the above-mentioned score information "Ssc" for each of the keywords, to each of the speaker adaptation processing section 9 and the bus 260 in the form of recognition result information "Srt".

The speaker adaptation processing section 9 conducts, in parallel with the above-described voice recognition processing, the speaker adaptation processing according to the present invention, based on the recognition result information "Srt" and the feature parameter "Spm".

The database 11 stores the acoustic model including the above-described keyword model and non-keyword model, and also stores, for each acoustic model, the above-mentioned penalty for likelihood calculation.

The speaker adaptation processing section 9 first reads the acoustic model prior to the speaker adaptation (including the keyword model and the non-keyword model) in the form of acoustic model "Sm", updates the acoustic model as read through the processing described later, with the use of the feature parameter "Spm" and the recognition result information "Srt", causes the updated acoustic model to be stored again in the form of updated acoustic model "Smp" in the database 11, and outputs the updated acoustic model "Smp" to the penalty adjustment processing section 10.

The penalty adjustment processing section 10 updates the penalty relative to the likelihood of the non-keyword model, based on the difference between the updated acoustic model "Smp" and the acoustic model "Sm" prior to the updating. More specifically, the penalty adjustment processing section 10 reads the penalty prior to the speaker adaptation processing and the acoustic model prior to the updating, in the form of the penalty information "Smt", from the database 11, updates the penalty in the penalty information "Smt", with the use of the thus read penalty prior to the speaker adaptation processing and acoustic model prior to the updating, as well as the above-mentioned updated acoustic model "Smp", to generate an updated penalty information "Stp" corresponding to the updated penalty, causes such a generated updated penalty information "Stp" to be stored again in the database 11, and outputs the updated penalty information "Stp" at the required timing to the likelihood calculating section 5, so as to provide the likelihood calculation. The processing of the penalty adjustment processing section 10 will also be described in detail later.

The updated acoustic model "Smp" and the updated penalty information "Stp" are stored in the database 11 so as to be utilized in the next voice recognition in the manner as described above.

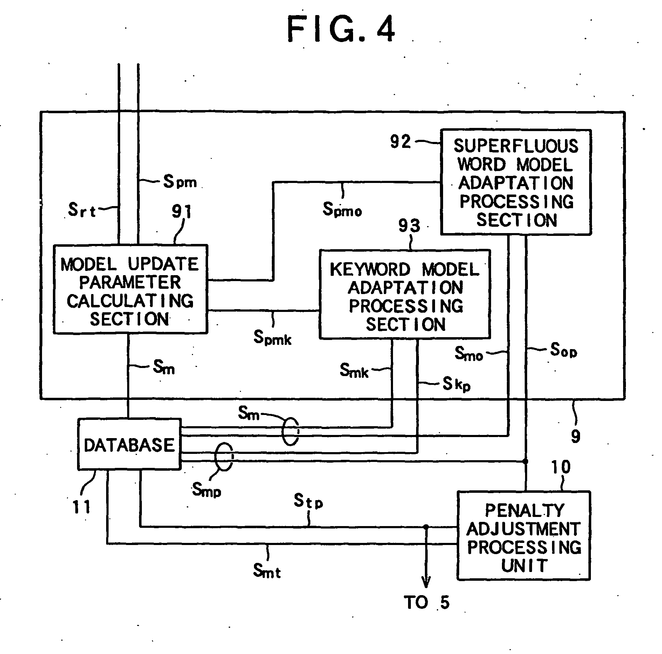

Now, description will be given below with reference to FIG. 4 of the configuration and operation of the speaker adaptation processing section 9 and the penalty adjustment processing section 10 of the above-mentioned series of structural components. The reference numerals, which are the same as those as shown in FIG. 3, are given to the same structural components in FIG. 4.

Ass shown in FIG. 4, the speaker adaptation processing section 9 is composed of a model update parameter calculating section 91, a keyword model adaptation processing section 93 and a non-keyword model adaptation processing section 92.

Now, operation of the speaker adaptation processing section 9 will be described below.

First, the model update parameter calculating section 91 utilizes the feature parameter "Spm" and the recognition result information "Srt" to calculate, for each of the keyword model and the non-keyword model, parameters with which the keyword model and the non-keyword model are to be updated, in each of detailed models corresponding to the respective words included in the keyword model and the non-keyword model, outputs the parameter for updating the detailed model in the keyword model to the keyword model adaptation processing section 93 in the formofupdatingparameter "Spmk" , and outputs the parameter for updating the detailed model in the keyword model to the non-keyword model adaptation processing section 92 in the form of updating parameter "Spmo". In this stage, the updating parameters "Spmk" and "Spmo" are obtained through the conventional calculation and outputted to the keyword model adaptation processing section 93 and the non-keyword model adaptation processing.

The keyword model adaptation processing section 93 updates the keyword model "Smk", which has been read in the form of acoustic model "Sm" from the database 11, with the updating parameter "Spmk", outputs the updated keyword model "Smk" to the database 11 in the form of updated keyword model "Skp" as a part of the updated acoustic model "Smp", and causes it to be stored again therein.

The updating processing of the keyword model "Smk", which is carried out in the keyword adaptation processing section 93, is executed with the use of the same speaker adaptation as the conventional, such as the MLLR or the MAP. The MLLR, whichmeans the maximum likelihood linear regression, is a method for updating all the models stored in the database 11 so as to superimpose them in the speech feature space of the specified speaker. The MAP, which means the maximum aposteriori probability estimation, is a method for updating the models so as to maximize the aposteriori probability whenever a single sample is given in the form of voice information "Sin".

The non-keyword model adaptation processing section 92 updates the non-keyword model "Smo", which has read in the form of acoustic model "Sm" from the database 11, with the updating parameter, which is obtained by applying a weighting processing described later to the updating parameter "Spmo", outputs the updated non-keyword model "Smo" to the database 11 in the form of updated non-keyword model "Sop" as a part of the updated acoustic model "Smp" to be stored again in the database 11, and outputs the updated non-keyword model "Sop" to the penalty adjustment processing section 10.

The penalty adjustment processing section 10 updates only the penalty value, which is utilized to calculate the non-keyword model, with (i) the penalty value, which is read in the form of the penalty information "Smt" from the database 1 and has not as yet been subj ected to the speaker adaptation processing, (ii) the acoustic model prior to the updating and (iii) the above-mentioned updated acoustic model "Smp" , so that the penalty value used to calculate the likelihood of the non-keyword is larger than the penalty value used to calculate the likelihood of the keyword model, generates an updated penalty information "Stp" corresponding to the penalty value after the updating, causes the updated penalty information "Stp" thus generated to be stored again in the database 11, and outputs same to the likelihood calculating section 5 at the required timing.

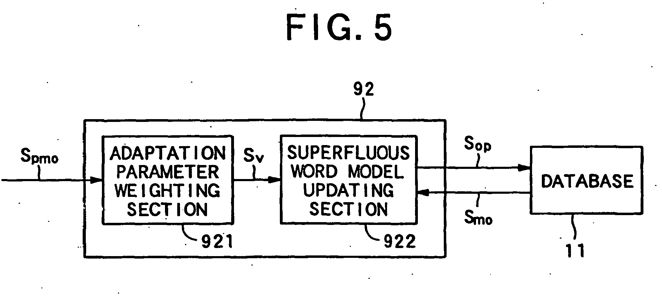

Now, description will be given below with reference to FIG. 5 of the detailed configuration and operation of the non-keyword model adaptation processing section 92.

As shown in FIG. 5, the non-keyword model adaptation processing section 92 is composed of an adaptation parameter weighting section 921 and a non-keyword model updating section 922.

Now, operation of the non-keyword model adaptation processing will be described below.

First, the adaptation parameter weighting section 921 applies a weighing processing to the updated parameter "Spmo" outputted from the model update parameter calculating section 91, and outputs same in the form of weighed-updated parameter "Sv" to the non-keyword model updating section 922.

The non-keyword model updating section 922 updates the non-keyword model "Smo" inputted from the data base, with the updated parameter "Sv", and outputs same to the database 11 in the form of updated non-keyword model "Sop" so as to be stored again therein.

The whole processing of the non-keyword model adaptation processing section 92 will be described more specifically. In case where the speaker adaptation processing is carried out in accordance with the MLLR method, the non-keyword model "Sop" is calculated by the following formula:

$$\mu' = \{ \alpha \times W + (1-\alpha) \times I \} \times \mu + \alpha \times b \qquad\qquad ----- \quad (1)$$

wherein, "$\mu$" being the non-keywordmodels prior to the updating processing "Smo", "$\mu'$" being the non-keyword models after the updating processing "Sop", "W" being a transformation matrix, "I" being a unit matrix, "b" being an offset vector relative to the transformation matrix and "$\alpha$" being a weighting factor, which has been determined experimentally. In case of the updating according to the MLLR method, the updating based on the formula (1) causes the non-keyword variation vector as shown in FIG. 1 becomes shorter, thus making it possible to reduce the likelihood of the non-keyword model relative to the likelihood of the keyword model.

In case where the speaker adaptation processing is carried out in accordance with the MAP method, the non-keyword model "Sop" is calculated by the following formula:

$$\mu' = \{ \tau/(n+\tau) \times I \} \times \mu + (n \times c) / (n + \tau)$$
$$----- \quad (2)$$

wherein, "$\mu$" being the non-keywordmodels prior to the updating processing "Smo", "$\mu'$" being the non-keyword models after the updating processing "Sop", "n" being time length of the feature parameter "Spm", "I" being a unit matrix, "c" being a unit time average of the feature parameter "Spm" and "$\tau$" being a MAP adaptation parameter, so that the value of the MAP adaptation parameter "$\tau$" utilized to calculate the non-keyword model "Sop" becomes larger than the value of the MAP adaptation parameter "$\tau$" utilized to update the keyword model "Smk" in accordance with the MAP method. In case of the updating according to the MAP method, modification of the MAP adaptation parameter "$\tau$" in the updating based on the formula (2) causes the non-keyword variation vector as shown in FIG. 1 becomes shorter, thus making it possible to reduce the likelihood of the non-keyword model relative to the likelihood of the keyword model.

The whole of the speaker adaptation processing described in detail above will be described based on the flowchart as shown in FIG. 6.

As shown in FIG. 6, in the above-described speaker adaptation processing, a series of voice recognition processings are first carried out (Step S1) in the noise estimation processing section 1, the model adaptation processing section 2, the noise reduction processing section 3, the speech parameter calculating section 4, the likelihood calculating section 5, the voice interval cutting section 6, the matching proces sing section 7 and the recognition result determining section 8, based on the voice information "Sin" as inputted initially. Then, the model update parameter calculating section 91 utilized the processing results to calculate the updated parameters "Spmo" and "Spmk" in the same manner as the conventional way (Step S2).

Then, reference is made for flags added to the voice information "Sin" as recognized, so as to judge as whether the model to be updated for the updated parameter "Spmo" or "Spmk" is the non-keyword model (Step S3).

When the model to be updated is the keyword model (Step S3: NO), the keyword model "Smk" is updated with the updated parameter "Spmk" in the keyword model adaptation processing section 93 (Step S5). Then, the updated keyword model "Skp2 after the updating is stored again in the database 11 (Step S7) and the system enters the next voice recognition processing.

When the model to be updated is the non-keyword model in judgment in Step S3 (Step S3: YES) , the updating processing according to the present invention is executed with the use of the updated parameter "Spmo" in the non-keyword model adaptation processing section 92 (Step S4).

Then, in the penalty adjustment processing section 10, the above-mentioned penalty value is updated with the updated non-keyword model "Sop" as updated in the Step S4, and the penalty information "Smt" prior to the updating, which has been obtained from the database 11.

Then, the updated non-keyword model "Sop" and the updated penalty information "Stp", both after the updating are stored again in the database 11 (Step S7) and the system enters the next voice recognition processing.

According to the operation of the voice recognition unit 300 of the embodiment of the present invention described above, the non-keyword variation vector used in the updating of the non-keyword model "Smo" is set so as to become smaller than the non-keyword variation vector corresponding to the case where the same updating processing as that of the keyword model "Smk" is applied to the updating of the non-keyword model "Smo". As a result, the recognition of the keyword is made in a state that the likelihood for the voice information "Sin" of the non-keyword model "Smo" is relatively lower than the likelihood for the voice information "Sin" of the keyword model "Smk", thus preventing the non-keyword model "Smo" from being excessively adapted to the voice information "Sin" and resulting in the further improvement in the recognition rate for the keyword.

In addition, in case where the likelihood linear regression is utilized, the non-keyword model "Smo" is updated with the use of the above-mentioned formula (1). It is therefore possible to carry out an easy processing to set the likelihood for the voice information "Sin" of the non-keyword model "Smo" relatively lower than the likelihood for the voice information "Sin" of the keyword model "Smk", so as to update the non-keyword model "Smo".

Alternatively, in case where the maximum aposteriori probability estimation is utilized, the non-keyword model "Smo" is updated in a state that the value of the MAP adaptation parameter "$\tau$" used to update the non-keyword model "Smo" is relatively higher than the value of the MAP adaptation parameter "$\tau$" used to update the keyword model "Smk". It is therefore possible to carry out an easy processing to set the likelihood for the voice information "Sin" of the non-keyword model "Smo" relatively lower than the likelihood for the voice information "Sin" of the keyword model "Smk", so as to update the non-keyword model "Smo".

In addition, the penalty is updated only when carrying out the updating processing of the non-keyword model "Smo". As a result, the recognition of the keyword is made in a state that the likelihood for the voice information "Sin" of the non-keyword model "Smo" becomes relatively lower than the likelihood for the voice information "Sin" of the keyword model "Smk", thus preventing the non-keyword model "Smo" from being excessively adapted to the voice information "Sin" and resulting in the further improvement in the recognition rate for the keyword.

The updating control of the penalty value (see Step S6 in FIG. 6) and the control of the model updating processing according to the speaker adaptation processing (see Step S4 in FIG. 6) are carried out in a superposed manner, thus making it possible to enhance effectively the recognition rate of the keyword.

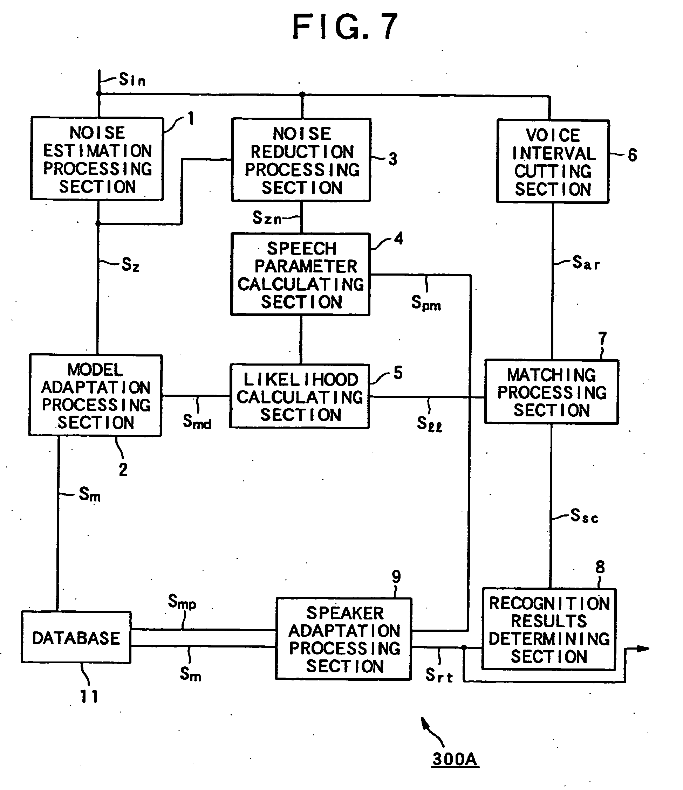

In the embodiment described above of the present invention, the updating control of the penalty value (see Step S6 in FIG. 6) and the control of the model updating processing according to the speaker adaptation processing (see Step S4 in FIG. 6) are carried out in the superposed manner. Alternatively, the present invention may be applied to a case where only the model updating processing according to the speaker adaptation processing is controlled, without making any updating control of the penalty value. In this case, there is utilized a voice recognition unit 300A as shown in FIG. 7 in which the penalty adjustment processing section 10 and the information input and output relevant thereto are removed from the voice recognition unit 300 according to the embodiment of the present invention as shown in FIG. 3. In such a case, the recognition rate of the keyword can also be improved.

Alternatively, the present invention may be applied to a case where there is made only the updating control of the penalty value, without controlling the model updating processing according to the speaker adaptation processing. In such a case, the voice recognition processing section is configured by substituting the same processing as the conventional adaptation processing for the processing in the speaker adaptation processing section 9 in the voice recognition unit 300 as shown in FIG. 3. In such a case, the recognition rate of the keyword can also be improved.

In an alternative to the updating control of the penalty value, which is made as described in the embodiment of the present invention, the penalty value may be updated based on a number of the updating processing of the non-keyword model "Smo". More specifically, the maximum of the penalty value (i.e., the maximum penalty value) is previously set. The penalty value and the maximum penalty value, which have been set prior to the speaker adaptation processing, are divided equally into "n" parts ("n" being a natural number) . The value obtained by dividing equally the penalty value into the "n" parts is added whenever the speaker adaptation processing is repeated, until the total value reaches the maximum penalty value. As a result, the recognition of the keyword is made in a state that the likelihood for the voice information "Sin" of the non-keyword model "Smo" becomes relatively lower than the likelihood for the voice information "Sin" of the keyword model "Smk", thus preventing the non-keyword model "Smo" from being excessively adapted to the voice information "Sin" and resulting in the further improvement in the recognition rate for the keyword.

With respect to the other way to carry out the updating control of the penalty value, an amount of variation of the penalty value may be controlled in accordance with an amount of adaptation of the non-keyword model "Smo" and the keyword model "Smk" (e.g., the absolute value of a difference between the average vector of the acoustic model prior to the speaker adaptation processing and the average vector thereof after the speaker adaptation processing.

If the program corresponding to the flowchart as shown in FIG. 6 is recorded in an information recording medium such as a flexible disc or a hard disc, or acquired and recorded through a network such as the Internet, reading the program through a general purpose computer such as a microcomputer to execute it makes it possible to cause the computer to serve as the voice recognition unit 300 according to the embodiment of the present invention.

[Examples]

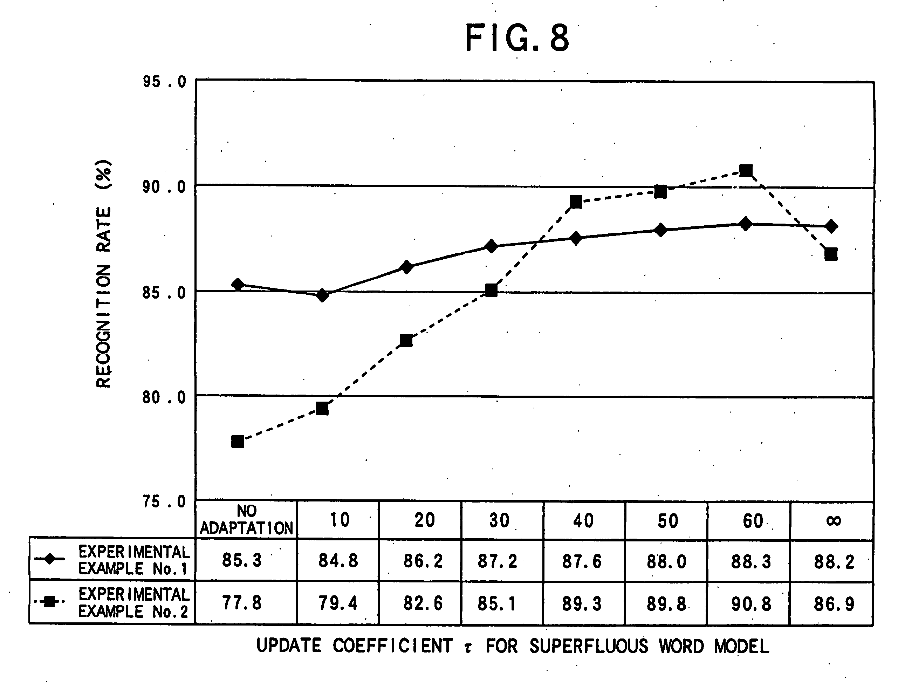

Now, with respect to examples showing concrete technical effects of the present invention, description will be give below with reference to FIG. 8 of experimental examples showing enhancement of the recognition rate in case where the present invention is applied to the speaker adaptation processing, which is applied to the non-keyword model "Smo" based on the MAP method. FIG. 8 is a graph illustrating the results of experiments.

FIG. 8 shows variation of the recognition rate when setting the MAP adaptation parameter "τ" in the speaker adaptation processing for the keyword model "Smk" as a fixed value of "20" in the speaker adaptation processing based on the MAP method, and increasing the value of the MAP adaptation parameter "τ" in the speaker adaptation processing for the non-keyword model "Smo", from "10" in a step-by-step manner.

Experimental conditions include (i) a noise mixed learning model being utilized, (ii) recognition results of the navigation command word being based on a continuous recognition, (iii) the recognition rate being plotted for the voice generated by nine males and eight females in a non-driving state, (iv) the experimental example No. 1 being made for voice including a non-keyword utterance having a word-length shorter than the keyword and (v) the experimental example No. 2 being made for voice including a non-keyword utterance having a word-length equal to or longer than the keyword.

The MAP adaptation parameter "τ=∞" corresponds to the recognition rate when the non-keyword model "Smo" is not subjected to any speaker adaptation processing based on the MAP method, and the experimental results of "no adaptation" corresponds to the recognition rate when both of the keyword model "Smk" and the non-keyword model "Smo" are not subjected to any speaker adaptation processing based on the MAP method.

As is clear from FIG. 8, it was recognized that the recognition rate was improved by 5% to 15% according to the present invention.

The invention may be embodied in other specific forms. The present embodiments are therefore to be considered in all respects as illustrative and not restrictive, the scope of the invention being indicated by the appended claims rather than by the foregoing description.

**Claims**

1. A voice recognition apparatus for recognizing a keyword to be recognized, from spoken words included in voice of speech, based on voice information corresponding to said voice, **characterized by** comprising:

   a keyword model storing device (11) for previously storing, for each keyword, a plurality of words to be potentially spoken as the keyword, in a form of keyword models;
   a non-keyword model storing device (11) for previously storing a plurality of words to be potentially spoken as a non-keyword, which is included in said spoken words excluding said keyword, in a form of non-keyword models;
   a model updating device (9) for individually updating said keyword models and said non-keyword models, based on a previously recognized word, which has already been recognized as the keyword given by a speaker; and
   a recognition device (8) for matching the updated keyword models and the updated non-keyword models with said voice information to recognize said keyword,

   wherein, when updating the non-keyword model, the updating device (9) uses a variation vector which is smaller than a variation vector corresponding to the case where the same updating processing as that of the keyword model is applied to the updating of the non-keyword model.

2. The apparatus as claimed in claim 1, **characterized in that**:

   said model updating device (9) updates said non-keyword models by using a Maximum Likelihood Linear Regression (MLLR) method based on a following formula;

$$\mu' = \{ \alpha \times W + (1-\alpha) \times I \} \times \mu + \alpha \times b \qquad\qquad \text{---} \quad (1)$$

wherein, "$\mu$" being the non-keyword models prior to the updating processing, "$\mu'$" being the non-keyword models after the updating processing, "W" being a transformation matrix, "I" being a unit matrix, "b" being an offset vector relative to the transformation matrix and "$\alpha$" being a weighting factor.

3. The apparatus as claimed in claim 1, **characterized in that**:

    said model updating device (9) updates said non-keyword models using a Maximum Aposteriori Probability Estimation method in which a value of adaptation parameter applied in the Maximum Aposteriori Probability Estimation method is set to be higher relative to a value of adaptation parameter applied for updating the keyword models.

4. A voice recognition method carried out in a voice recognition system comprising a keyword model storing device (11) for previously storing, for each keyword to be recognized, of spoken words included in voice of speech, a plurality of words to be potentially spoken as the keyword, in a form of keyword models, and a non-keyword model storing device (11) for previously storing a plurality of words to be potentially spoken as a non-keyword, which is included in said spoken words excluding said keyword, in a form of non-keyword models, to recognize said keyword based on voice information corresponding to said voice, said method **characterized by** comprising:

    a model updating step for individually updating said keyword models and said non-keyword models, based on a previously recognized word, which has already been recognized as the keyword given by a speaker; and
    a recognition step for matching the updated keyword models and the updated non-keyword models with said voice information to recognize said keyword,

    wherein, when updating the non-keyword model, the updating device (9) uses a variation vector which is smaller than a variation vector corresponding to the case where the same updating processing as that of the keyword model is applied to the updating of the non-keyword model.

5. The method as claimed in claim 4, wherein:

    said model updating device (9) updates said non-keyword models by using a Maximum Likelihood Linear Regression (MLLR) method based on a following formula:

$$\mu' = \{ \alpha \times W + (1-\alpha) \times I \} \times \mu + \alpha \times b \qquad\qquad \text{---} \quad (1)$$

    wherein, "$\mu$" being the non-keyword models prior to the updating processing, "$\mu'$" being the non-keyword models after the updating processing, "W" being a transformation matrix, "I" being a unit matrix, "b" being an offset vector relative to the transformation matrix and "$\alpha$" being a weighting factor.

6. The method as claimed in claim 4, wherein:

    said model updating device (9) updates said non-keyword models using a Maximum Aposteriori Probability Estimation method in which a value of adaptation parameter applied in the Maximum Aposteriori Probability Estimation method is set to be higher relative to a value of adaptation parameter applied for updating the keyword models.

7. A program for voice recognition, which is to be executed by a computer included in a voice recognition system comprising a keyword model storing device (11) for previously storing, for each keyword to be recognized fr om spoken words included in voice of speech, a plurality of words to be potentially spoken as the keyword in a form of keyword models, and a non-keyword model storing device (11) for previously storing a plurality of words to be potentially spoken as a non-keyword, which is included in said spoken words excluding said keyword, in a form of non-keyword models, to recognize said keyword based on voice information corresponding to said voice, to cause the computer to function as:

a model updating device (9) for individually updating said keyword models and said non-keyword models, based on a previously recognized word, which has already been recognized as the keyword given by a speaker; and a recognition device (8) for matching the updated keyword models and the updated non-keyword models with said voice information to recognize said keyword,

wherein said computer is caused to function as said model updating device (9) that updates the non-keyword models using a variation vector which is smaller than a variation vector corresponding to the case where the same updating processing as that of the keyword model is applied to the updating of the non-keyword model.

8. The program as claimed in claim 7, **characterized in that**:

said model updating device (9) updates said non-keyword models by using a Maximum Likelihood Linear Regression (MLLR) method based on a following formula:

$$\mu' = \{\ \alpha \times W + (1 - \alpha) \times I\ \} \times \mu + \alpha \times b \qquad\qquad ---\quad (1)$$

wherein, "$\mu$" being the non-keyword models prior to the updating processing, "$\mu'$" being the non-keyword models after the updating processing, "W" being a transformation matrix, "I" being a unit matrix, "b" being an offset vector relative to the transformation matrix and "$\alpha$" being a weighting factor.

9. The program as claimed in claim 7, wherein:

said model updating device (9) updates said non-keyword models using a Maximum Aposteriori Probability Estimation method in which a value of adaptation parameter applied in the Maximum Aposteriori Probability Estimation method is set to be higher relative to a value of adaptation parameter applied for updating the keyword models.

10. An information recording medium on which the program for voice recognition as claimed in any of claims 7 to 9 is recorded so as to be readable by said computer.

**Patentansprüche**

1. Spracherkennungsvorrichtung zum Erkennen eines zu erkennenden Schlüsselworts unter in einer Sprechstimme enthaltenen gesprochenen Wörtern auf der Basis von der Stimme entsprechenden Stimminformationen, **dadurch gekennzeichnet, dass** sie Folgendes umfasst:

eine Schlüsselwortmodellspeicherungseinrichtung (11) zum vorherigen Speichern von mehreren, potenziell als das Schlüsselwort zu sprechenden Wörtern für jedes Schlüsselwort in einer Form von Schlüsselwortmodellen; eine Nichtschlüsselwortmodellspeicherungseinrichtung (11) zum vorherigen Speichern von mehreren, potenziell als ein Nichtschlüsselwort zu sprechenden Wörtern, das in den gesprochenen Wörtern enthalten ist außer dem Schlüsselwort, in einer Form von Nichtschlüsselwortmodellen; eine Modellaktualisierungseinrichtung (9) zum individuellen Aktualisieren der Schlüsselwortmodelle und der Nichtschlüsselwortmodelle auf der Basis eines zuvor erkannten Worts, das bereits als das von einem Sprecher gegebene Schlüsselwort erkannt worden ist; und eine Erkennungseinrichtung (8) zum Abgleichen der aktualisierten Schlüsselwortmodelle und der aktualisierten Nichtschlüsselwortmodelle mit den Stimminformationen, um das Schlüsselwort zu erkennen,

wobei die Aktualisierungseinrichtung (9) beim Aktualisieren des Nichtschlüsselwortmodells einen Variationsvektor verwendet, der kleiner ist als ein Variationsvektor, entsprechend dem Fall; wenn auf das Aktualisieren des Nichtschlüsselwortmodells die gleiche Aktualisierungsverarbeitung wie die des Schlüsselwortmodells angewendet wird.

2. Vorrichtung nach Anspruch 1, **dadurch gekennzeichnet, dass**:

die Modellaktualisierungseinrichtung (9) die Nichtschlüsselwortmodelle aktualisiert durch Verwendung einer Maximum-Likelihood-Linear-Regression-Methode (MLLR) auf der Basis einer folgenden Formel:

$$\mu' = \{\alpha*W + (1 - \alpha)*I\} * \mu + \alpha*b \qquad (1)$$

wobei "$\mu$" die Nichtschlüsselwortmodelle vor der Aktualisierungsverarbeitung sind, "$\mu'$" die Nichtschlüsselwortmodelle nach der Aktualisierungsverarbeitung sind, "W" eine Transformationsmatrix ist, "I" eine Einheitsmatrix ist, "b" ein Offsetvektor relativ zu der Transformationsmatrix ist und "$\alpha$" ein Gewichtungsfaktor ist.

3. Vorrichtung nach Anspruch 1, **dadurch gekennzeichnet, dass**:

   die Modellaktualisierungseinrichtung (9) die Nichtschlüsselwortmodelle unter Verwendung einer Maximum-Aposteriori-Probability-Schätzungsmethode aktualisiert, bei der ein Wert eines bei der Maximum-Aposteriori-Probability-Schätzungsmethode angewendeten Adaptionsparameters so eingestellt ist, dass er höher ist relativ zu einem Wert eines Adaptionsparameters, der zum Aktualisieren der Schlüsselwortmodelle angewendet wird.

4. Spracherkennungsverfahren, ausgeführt in einem Spracherkennungssystem, das Folgendes umfasst: eine Schlüsselwortmodellspeicherungseinrichtung (11) zum vorherigen Speichern, für jedes zu erkennende Schlüsselwort, von in einer Sprechstimme enthaltenen gesprochenen Wörtern, mehreren, potenziell als das Schlüsselwort zu sprechenden Wörtern, in einer Form von Schlüsselwortmodellen, und eine Nichtschlüsselwortmodellspeicherungseinrichtung (11) zum vorherigen Speichern von mehreren, potenziell als ein Nichtschlüsselwort zu sprechenden Wörtern, das in den gesprochenen Wörtern enthalten ist außer dem Schlüsselwort, in einer Form von Nichtschlüsselwortmodellen, um das Schlüsselwort auf der Basis von der Stimme entsprechenden Stimminformationen zu erkennen, wobei das Verfahren **dadurch gekennzeichnet ist, dass** es Folgendes umfasst:

   einen Modellaktualisierungsschritt zum individuellen Aktualisieren der Schlüsselwortmodelle und der Nichtschlüsselwortmodelle auf der Basis eines zuvor erkannten Worts, das bereits als das von einem Sprecher gegebene Schlüsselwort erkannt worden ist; und
   einen Erkennungsschritt zum Abgleichen der aktualisierten Schlüsselwortmodelle und der aktualisierten Nichtschlüsselwortmodelle mit den Stimminformationen, um das Schlüsselwort zu erkennen,

   wobei die Aktualisierungseinrichtung (9) beim Aktualisieren des Nichtschlüsselwortmodells einen Variationsvektor verwendet, der kleiner ist als ein Variationsvektor, entsprechend dem Fall, wenn auf das Aktualisieren des Nichtschlüsselwortmodells die gleiche Aktualisierungsverarbeitung wie die des Schlüsselwortmodells angewendet wird.

5. Verfahren nach Anspruch 4, wobei:

   die Modellaktualisierungseinrichtung (9) die Nichtschlüsselwortmodelle aktualisiert durch Verwendung einer Maximum-Likelihood-Linear-Regression-Methode (MLLR) auf der Basis einer folgenden Formel:

$$\mu' = \{\alpha*W + (1 - \alpha)*I\} * \mu + \alpha*b \qquad (1)$$

   wobei "$\mu$" die Nichtschlüsselwortmodelle vor der Aktualisierungsverarbeitung sind, "$\mu'$" die Nichtschlüsselwortmodelle nach der Aktualisierungsverarbeitung sind, "W" eine Transformationsmatrix ist, "I" eine Einheitsmatrix ist, "b" ein Offsetvektor relativ zu der Transformationsmatrix ist und "$\alpha$" ein Gewichtungsfaktor ist.

6. Verfahren nach Anspruch 4, wobei:

   die Modellaktualisierungseinrichtung (9) die Nichtschlüsselwortmodelle unter Verwendung einer Maximum-Aposteriori-Probability-Schätzungsmethode aktualisiert, bei der ein Wert eines bei der Maximum-Aposteriori-Probability-Schätzungsmethode angewendeten Adaptionsparameters so eingestellt ist, dass er höher ist relativ zu einem Wert eines Adaptionsparameters, der zum Aktualisieren der Schlüsselwortmodelle angewendet wird.

7. Programm zur Spracherkennung, das von einem Computer, der in einem Spracherkennungssystem enthalten ist, ausgeführt werden soll, das Folgendes umfasst:

eine Schlüsselwortmodellspeicherungseinrichtung (11) zum vorherigen Speichern, für jedes Schlüsselwort, das aus in einer Sprechstimme enthaltenen gesprochenen Wörtern erkannt werden soll, von mehreren, potenziell als das Schlüsselwort zu sprechenden Wörtern in einer Form von Schlüsselwortmodellen, und eine Nichtschlüsselwortmodellspeicherungseinrichtung (11) zum vorherigen Speichern von mehreren, potenziell als ein Nichtschlüsselwort zu sprechenden Wörtern, das in den gesprochenen Wörtern enthalten ist außer dem Schlüsselwort, in einer Form von Nichtschlüsselwortmodellen, um das Schlüsselwort auf der Basis von der Stimme entsprechenden Stimminformationen zu erkennen, um zu bewirken, dass der Computer wirkt als:

eine Modellaktualisierungseinrichtung (9) zum individuellen Aktualisieren der Schlüsselwortmodelle und der Nichtschlüsselwortmodelle auf der Basis eines zuvor erkannten Worts, das bereits als das von einem Sprecher gegebene Schlüsselwort erkannt worden ist; und
eine Erkennungseinrichtung (8) zum Abgleichen der aktualisierten Schlüsselwortmodelle und der aktualisierten Nichtschlüsselwortmodelle mit den Stimminformationen, um das Schlüsselwort zu erkennen,

wobei der Computer veranlasst wird, als die Modellaktualisierungseinrichtung (9) zu wirken, die die Nichtschlüsselwortmodelle aktualisiert unter Verwendung eines Variationsvektors, der kleiner ist als ein Variationsvektor, entsprechend dem Fall, wenn auf das Aktualisieren des Nichtschlüsselwortmodells die gleiche Aktualisierungsverarbeitung wie die des Schlüsselwortmodells angewendet wird.

**8.** Programm nach Anspruch 7, wobei:

die Modellaktualisierungseinrichtung (9) die Nichtschlüsselwortmodelle aktualisiert durch Verwendung einer Maximum-Likelihood-Linear-Regression-Methode (MLLR) auf der Basis einer folgenden Formel:

$$\mu' = \{\alpha * W + (1 - \alpha) * I\} * \mu + \alpha * b \tag{1}$$

wobei "$\mu$" die Nichtschlüsselwortmodelle vor der Aktualisierungsverarbeitung sind, "$\mu'$" die Nichtschlüsselwortmodelle nach der Aktualisierungsverarbeitung sind, "W" eine Transformationsmatrix ist, "I" eine Einheitsmatrix ist, "b" ein Offsetvektor relativ zu der Transformationsmatrix ist und "$\alpha$" ein Gewichtungsfaktor ist.

**9.** Programm nach Anspruch 7, wobei:

die Modellaktualisierungseinrichtung (9) die Nichtschlüsselwortmodelle unter Verwendung einer Maximum-Aposteriori-Probability-Schätzungsmethode aktualisiert, bei der ein Wert eines bei der Maximum-Aposteriori-Probability-Schätzungsmethode angewendeten Adaptionsparameters so eingestellt ist, dass er höher ist relativ zu einem Wert eines Adaptionsparameters, der zum Aktualisieren der Schlüsselwortmodelle angewendet wird.

**10.** Informationsaufzeichnungsmedium, auf dem das Programm zur Spracherkennung nach einem der Ansprüche 7 bis 9 aufgezeichnet ist, um von dem Computer gelesen werden zu können.

**Revendications**

**1.** Appareil de reconnaissance vocale pour reconnaître un mot-clé à reconnaître, à partir de mots prononcés compris dans des paroles, sur la base de données vocales correspondant à ladite voix, **caractérisé en ce qu'**il comporte :

un dispositif de stockage de modèles de mots-clés (11) pour le stockage préalable, pour chaque mot-clé, d'une pluralité de mots à prononcer potentiellement comme le mot-clé, sous une forme de modèles de mots-clés ;
un dispositif de stockage de modèles de non-mots-clés (11) pour le stockage préalable, d'une pluralité de mots à prononcer potentiellement comme non-mot-clé qui est compris dans lesdits mots prononcés à l'exception dudit mot-clé sous une forme de modèles de non-mots-clés ;
dispositif de mise à jour de modèles (9) pour mettre à jour individuellement lesdits modèles de mots-clés et lesdits modèles de non-mots-clés, sur la base d'un mot précédemment reconnu, qui a déjà été reconnu comme le mot-clé donné par un locuteur ; et

un dispositif de reconnaissance (8) pour associer les modèles de mots-clés mis à jour et les modèles de non-mots-clés mis à jour aux données vocales afin de reconnaître ledit mot-clé,

dans lequel, lors de la mise à jour du modèle de non-mots-clés, le dispositif de mise à jour (9) utilise un vecteur de variation qui est plus petit qu'un vecteur de variation correspondant au cas où le même processus de mise à jour que celui du modèle de mots-clés est appliqué à la mise à jour du modèle de non-mots-clés.

2. Appareil selon la revendication 1, **caractérisé en ce que** :

   ledit dispositif de mise à jour de modèles (9) met à jour les modèles de non-mots-clés en utilisant un procédé MLLR (Maximum Likelihood Linear Regression) sur la base d'une formule suivante :

$$\mu' = \{\alpha xW+(1-a)xI\} \times \mu + \alpha xb \qquad (1)$$

   dans laquelle « $\mu$ » est les modèles de non-mots-clés avant le processus de mise à jour, « $\mu'$ » étant les modèles de non-mots-clés après le processus de mise à jour, « W » étant une matrice de transformation, « I » étant une matrice d'unité, « b » étant un vecteur de décalage relatif à la matrice de transformation et « $\alpha$ » étant un facteur de pondération.

3. Appareil selon la revendication 1, **caractérisé en ce que** :

   ledit dispositif de mise à jour de modèles (9) met à jour lesdits modèles de non-mots-clés au moyen d'un procédé d'Estimation de probabilité a posteriori maximale dans lequel une valeur de paramètre d'adaptation appliquée dans le procédé d'Estimation de probabilité a posteriori maximale est calculée pour être supérieure à une valeur de paramètre d'adaptation appliquée pour mettre à jour les modèles de mots-clés.

4. Procédé de reconnaissance vocale réalisé dans un système de reconnaissance vocale comprenant un dispositif de stockage de modèles de mots-clés (11) pour le stockage préalable, pour chaque mot clé à reconnaître, à partir de mots prononcés compris dans des paroles, d'une pluralité de mots à prononcer potentiellement comme le mot-clé, sous une forme de modèles de mots-clés, et un dispositif de stockage de modèles de non-mots-clés (11) pour le stockage préalable d'une pluralité de mots à prononcer potentiellement comme un non-mot-clé qui est compris dans lesdits mots prononcés à l'exception dudit mot-clé, sous une forme de modèles de non-mots-clés, afin de reconnaître ledit mot-clé sur la base de données vocales correspondant à ladite voix, ledit procédé étant **caractérisé en ce qu'**il comporte :

   une étape de mise à jour de modèle pour mettre à jour individuellement lesdits modèles de mots-clés et lesdits modèles de non-mots-clés, sur la base d'un mot précédemment reconnu, qui a déjà été reconnu comme le mot-clé donné par un locuteur ; et
   une étape de reconnaissance pour associer les modèles de mots-clés mis à jour et les modèles de non-mots-clés mis à jour aux dites données vocales afin de reconnaître ledit mot-clé,

   dans lequel, lors de la mise à jour du modèle de non-mots-clés, le dispositif de mise à jour (9) utilise un vecteur de variation qui est plus petit qu'un vecteur de variation correspondant au cas où le même processus de mise à jour que celui du modèle de mots-clés est appliqué à la mise à jour du modèle de non-mots-clés.

5. Procédé selon la revendication 4, dans lequel :

   ledit dispositif de mise à jour de modèles (9) met à jour les modèles de non-mots-clés en utilisant un procédé MLLR (Maximum Likelihood Linear Regression) sur la base d'une formule suivante :

$$\mu' = \{\alpha xW+(1-a)xI\} \times \mu + \alpha xb \qquad (1)$$

   dans laquelle « $\mu$ » est les modèles de non-mots-clés avant le processus de mise à jour, « $\mu'$ » étant les modèles de non-mots-clés après le processus de mise à jour, « W » étant une matrice de transformation, « I » étant une

matrice d'unité, « b » étant un vecteur de décalage relatif à la matrice de transformation et « α » étant un facteur de pondération.

**6.** Procédé selon la revendication 4, dans lequel :

ledit dispositif de mise à jour de modèles (9) met à jour lesdits modèles de non-mots-clés au moyen d'un procédé d'Estimation de probabilité a posteriori maximale dans lequel une valeur de paramètre d'adaptation appliquée dans le procédé d'Estimation de probabilité a posteriori maximale est calculée pour être supérieure à une valeur de paramètre d'adaptation appliquée pour mettre à jour les modèles de mots-clés.

**7.** Logiciel de reconnaissance vocale, qui doit être exécuté par un ordinateur inclus dans un système de reconnaissance vocale comprenant un dispositif de stockage de modèles de mots clés (11) pour le stockage préalable, pour chaque mot clé à reconnaître à partir de mots parlés compris dans des paroles, d'une pluralité de mots à prononcer potentiellement comme le mot-clé sous une forme de modèles de mots clés, et un dispositif de stockage de modèles de non-mots-clés (11) pour le stockage préalable d'une pluralité de mots à prononcer potentiellement comme un non-mot-clé, qui est compris dans lesdits mots prononcés à l'exception dudit mot-clé, sous une forme de modèles de non-mots-clés, afin de reconnaître ledit mot-clé sur la base de données vocales correspondant à ladite voix, de manière que l'ordinateur fonctionne comme :

un dispositif de mise à jour de modèle (9) pour mettre à jour individuellement lesdits modèles de mots-clés et lesdits modèles de non-mots-clés, sur la base d'un mot précédemment reconnu, qui a déjà été reconnu comme le mot-clé donné par un locuteur ; et
un dispositif de reconnaissance (8) pour associer les modèles de mots-clés mis à jour et les modèles de non-mots-clés mis à jour aux données vocales afin de reconnaître ledit mot-clé,

dans lequel ledit ordinateur est exploité comme ledit dispositif de mise à jour de modèles (9) qui met à jour les modèles de non-mots-clés au moyen d'un vecteur de variation qui est plus petit qu'un vecteur de variation correspondant au cas où le même processus de mise à jour que celui du modèle de mots-clés est appliqué à la mise à jour du modèle de non-mots-clés.

**8.** Appareil selon la revendication 7, **caractérisé en ce que** :

ledit dispositif de mise à jour de modèles (9) met à jour les modèles de non-mots-clés en utilisant un procédé MLLR (Maximum Likelihood Linear Regression) sur la base d'une formule suivante :

$$\mu' = \{\alpha x W + (1-a) x I\} \times \mu + \alpha x b \qquad (1)$$

dans laquelle « $\mu$ » est les modèles de non-mots-clés avant le processus de mise à jour, « $\mu'$ » étant les modèles de non-mots-clés après le processus de mise à jour, « W » étant une matrice de transformation, « I » étant une matrice d'unité, « b » étant un vecteur de décalage relatif à la matrice de transformation et « α » étant un facteur de pondération.

**9.** Procédé selon la revendication 7, dans lequel :

ledit dispositif de mise à jour de modèles (9) met à jour lesdits modèles de non-mots-clés au moyen d'un procédé d'Estimation de probabilité a posteriori maximale dans lequel une valeur de paramètre d'adaptation appliquée dans le procédé d'Estimation de probabilité a posteriori maximale est calculée pour être supérieure à une valeur de paramètre d'adaptation appliquée pour mettre à jour les modèles de mots-clés.

**10.** Support d'enregistrement de données sur lequel le logiciel de reconnaissance vocale selon l'une quelconque des revendications 7 à 9 est enregistré de manière à pouvoir être lu par ledit ordinateur.

# FIG. 1

SUPERFLUOUS WORD MODEL

SUPERFLUOUS WORD VARIATION VECTOR

KEY WORD

KEY WORD VARIATION VECTOR

○ : MODEL PRIOR TO SPEAKER ADAPTATION

● : MODEL AFTER SPEAKER ADAPTATION

▲ : MODEL AFTER WEIGHTING

# FIG. 2

EP 1 475 777 B1

# FIG. 3

21

EP 1 475 777 B1

# FIG. 4

# FIG. 5

# FIG. 6

START

VOICE OF
SPEECH → VOICE RECOGNITION
PROCESSING ─ S1

UPDATE PARAMETER
CALCULATION
PROCESSING ─ S2

SUPERFLUOUS
WORD MODEL? ── S3 ─ NO

YES

ACOUSTIC
MODEL → UPDATE PROCESSING
OF SUPERFLUOUS
WORD MODEL ─ S4

S5
KEYWORD
MODEL UPDATE
PROCESSING

PENALTY → UPDATE
PROCESSING
OF PENALTY ─ S6

STORING UPDATED
SPEAKER ADAPTATION
MODEL AND PENALTY ─ S7

RETURN

24

EP 1 475 777 B1

# FIG. 7

```
                  Sin
   ┌────────────────┐1   ┌────────────────┐3   ┌────────────────┐6
   │     NOISE       │    │     NOISE       │    │    VOICE        │
   │ ESTIMATION      │    │ REDUCTION       │    │ INTERVAL        │
   │ PROCESSING      │    │ PROCESSING      │    │ CUTTING         │
   │  SECTION        │    │  SECTION        │    │  SECTION        │
   └────────────────┘    └────────────────┘    └────────────────┘
                                  Szn
                         ┌────────────────┐4
           Sz            │    SPEECH       │
                         │ PARAMETER       │        Spm          Sar
                         │ CALCULATING     │
                         │  SECTION        │
                         └────────────────┘
   ┌────────────────┐2   ┌────────────────┐5   ┌────────────────┐7
   │    MODEL        │    │  LIKELIHOOD     │    │  MATCHING       │
   │ ADAPTATION      │    │ CALCULATING     │    │ PROCESSING      │
   │ PROCESSING      │    │  SECTION        │    │  SECTION        │
   │  SECTION        │    │                 │    │                 │
   └────────────────┘    └────────────────┘    └────────────────┘
        Smd                       Sℓℓ
      Sm                                                  Ssc
                         ┌────────────────┐9   ┌────────────────┐8
   ┌──────────┐ Smp      │   SPEAKER       │    │ RECOGNITION     │
   │ DATABASE │          │ ADAPTATION      │    │ RESULTS         │
   │          │ Sm       │ PROCESSING      │    │ DETERMINING     │
   └──────────┘          │  SECTION        │    │  SECTION        │
        11               └────────────────┘    └────────────────┘
                                             Srt
                                      300A
```

25

# FIG. 8

| | NO ADAPTATION | 10 | 20 | 30 | 40 | 50 | 60 | ∞ |
|---|---|---|---|---|---|---|---|---|
| ◆ EXPERIMENTAL EXAMPLE No.1 | 85.3 | 84.8 | 86.2 | 87.2 | 87.6 | 88.0 | 88.3 | 88.2 |
| ■ EXPERIMENTAL EXAMPLE No.2 | 77.8 | 79.4 | 82.6 | 85.1 | 89.3 | 89.8 | 90.8 | 86.9 |

UPDATE COEFFICIENT τ FOR SUPERFLUOUS WORD MODEL

EP 1 475 777 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1215654 A

**Non-patent literature cited in the description**

- **Hofstetter E M et al.** Techniques for task independent word spotting in continuous speech messages. *Digital Signal Processing 2, Estimation, VLSI. San Francisco,* 23 March 1992, vol. 5, ISBN 0-7803-0532-9